# EUROPÄISCHE PATENTSCHRIFT

(11) **EP 3 607 597 B1**
(45) Veröffentlichungstag und Bekanntmachung des Hinweises auf die Patenterteilung: **13.12.2023**
(21) Anmeldenummer: 18726724.0
(22) Anmeldetag: 03.04.2018
(51) Int. Cl.: H01M 50/403, H01M 50/44, H01M 50/446, H01M 50/449, H01M 50/437, H01M 50/489, H01M 50/491, H01M 10/0525

(54) **GLASBASIERTER BATTERIESEPARATOR**
GLASS-BASED BATTERY SEPARATOR
SÉPARATEUR À BASE DE VERRE

(30) Priorität: 03.04.2017 DE 102017205653
(43) Veröffentlichungstag der Anmeldung: 12.02.2020
(73) Patentinhaber: VITRULAN Textile Glass GmbH, 95509 Marktschorgast (DE)
(72) Erfinder: ZETTL, Heiko, 95448 Bayreuth (DE); GERDES, Thorsten, 95488 Eckersdorf (DE); SCHADECK, Ulrich, 92637 Weiden (i. d. OPf.) - Rothenstadt (DE)
(74) Vertreter: Pfenning, Meinig & Partner mbB
(86) Internationale Anmeldenummer: PCT/EP2018/058434
(87) Internationale Veröffentlichungsnummer: WO 2018/185075

(56) Entgegenhaltungen:
- EP-A1- 2 605 311
- WO-A1-2013/045350
- WO-A1-2016/210225

## Beschreibung

Die vorliegende Erfindung betrifft einen Batterieseparator, wobei dieser einen Verbund aus mindestens einem Trägermaterial, mindestens einem Glasplättchen und optional mindestens einem Binder umfasst. Weiterhin betrifft die vorliegende Erfindung Verfahren zur Herstellung dieses Batterieseparators sowie dessen Verwendung in einer Batterie.

Batterieseparatoren sind aus dem Stand der Technik bekannt, häufig werden Polymer-basierte, mikroporöse Folien oder Gewebe als Separatoren für Batterien, insbesondere für Lithium-Ionen-Batterien eingesetzt. Diese Separatoren können aus mehreren Lagen unterschiedlicher Polymere mit unterschiedlichen Schmelzpunkten bestehen.

WO 2014/047126 A1 beschreibt Batterieseparatoren, die das Dendritenwachstum und interne Kurzschlüsse auf Grund des Dendritenwachstums verhindern. Diese Separatoren weisen mindestens eine Polyethylenschicht mit einer Dicke von gleich oder weniger als etwa 6 pm auf.

DE 10 2011 003 186 A1 betrifft eine Polymerfasern aufweisende Folie, deren Polymerfasern zumindest an den Überkreuzungspunkten zwischen den Poren miteinander verschweißt, oder kraft- oder formschlüssig miteinander verbunden sind, ein Verfahren zu deren Herstellung, sowie deren Verwendung, insbesondere als Batterieseparatoren.

Die Polymer-basierten Separatoren sind jedoch nur bis zu Temperaturen von weit unter 200°C mechanisch stabil und zeigen bereits ab 100°C einen deutlichen Schrumpf, sodass die Funktion der physischen Trennung der Elektroden nicht mehr gewährleistet ist. Außerdem zeigen die Polymer-basierten Separatoren eine schlechte Benetzung gegenüber der Elektrolytflüssigkeit.

Neben den Polymer-basierten Separatoren werden im Stand der Technik auch Keramik-basierte Separator-Materialien beschrieben. DE 103 47 566 A1 betrifft einen Separator für eine elektrochemische Zelle, der einen flexiblen, durchbrochenen Träger mit einer keramischen Beschichtung umfasst. Diese Beschichtung enthält 75 bis 99 Massenanteile Oxidpartikel und 1 bis 25 Massenanteile Zeolith-Partikel.

Für die Keramik-basierten Batterieseparatoren wird eine etwas höhere Temperaturstabilität von bis zu 250°C erreicht.

Auch Glas-basierte Batterieseparatoren wurden bereits beschrieben.

WO 2010/149265 A1 betrifft einen Batterieseparator mit einer porösen, ionenpermeablen Glasscheibe oder einer porösen, ionenpermeablen Glaskeramikscheibe, wobei die Scheibe eine mittlere Porengröße von weniger als 1 µm und eine Dicke von weniger als 0,3 mm aufweist.

US 5,468,572 beschreibt Verfahren zur Herstellung einer ventilgesteuerten Blei/Säure-Batterie, welche aus einem Batteriegehäuse und wenigstens einer aus einem Glasfasern enthaltenden Separator bestehenden Zelle, wenigstens einer positiven Elektrode, wenigstens einer negativen Elektrode und einer in den Elektroden und im Separator enthaltenen Elektrolytmenge besteht.

WO 2016/210225 A1 betrifft spezielle Glasmatten oder Separatoren für Batterien. Diese Glasmatten können aus unlöslichen Glasfasern hergestellt werden, die mit löslichen Materialien gemischt werden.

WO 2013/045350 A1 beschreibt die Verwendung eines Materials auf Glasbasis als Additiv oder Füllstoff für einen wiederaufladbaren Lithium-Ionen-Akkumulator.

US 2013/0157109 A1 betrifft einen Separator umfassend Glasplättchen und Fasermaterialien. Die Porosität dieser Glasplättchen liegt zwischen 70 und 95 % und der durchschnittliche Partikeldurchmesser liegt zwischen 15 und 200 µm.

US 2008/0124559 A1 beschreibt Glasplättchen, die insbesondere in Beschichtungsmaterialien, Tintenzusammensetzungen und Kosmetika verwendet werden, aber die auch für den Einsatz in Batterieseparatoren in Frage kommen.

Glasbasierte Separatoren sind als Fasermatten, welche sehr dick sind oder als poröse Glasplatten, welche mechanisch unflexibel sind, bekannt. Die Separatoren auf Basis von Glasplättchen hingegen weisen eine sehr hohe Porosität auf oder es wird gar keine Größe der Glasplättchen definiert. Zudem weisen die Glasplättchen eine Glaszusammensetzung auf, die es nicht erlaubt, dass Ionen, insbesondere Natrium, aus dem Glas an Elektrodenreaktionen teilnehmen.

Weiterhin stellen die aus dem Stand der Technik bekannten Separatoren meist inaktive Bauteile der Batteriezelle dar, welche zwar zum Gewicht und der Größe der Zelle beitragen, die jedoch keine elektrochemischen Aufgaben erfüllen.

Ausgehend davon bestand die Aufgabe der vorliegenden Erfindung darin Batterieseparatoren bereit zu stellen, die eine Temperaturstabilität von über 500°C, insbesondere einen Schrumpf von <2 % bei 500°C und eine verbesserte mechanische Stabilität aufweisen. Weiterhin war es Aufgabe vorliegender Erfindung, dass die Batterieseparatoren eine optimierte Benetzung mit einer Elektrolytflüssigkeit, insbesondere einer organischen Elektrolytflüssigkeit, gewährleisten und dass diese einfach hergestellt werden können, insbesondere sollen sie in einem Rolle-zu-Rolle-Verfahren gefertigt werden können. Weiterhin ist es erfindungswesentlich, dass die Eigenschaften der Batterieseparatoren je nach Anwendungsgebiet eingestellt werden können. So war es Aufgabe der vorliegenden Erfindung Batterieseparatoren bereit zu stellen, die eine hohe Zellperformance gewährleisten, insbesondere durch Partizipation von Ionen aus dem Separator an Elektrodenprozessen oder deren Alterung verringert wird oder die chemisch und/oder temperaturstabil sind.

Diese Aufgabe wird durch einen Batterieseparator mit den Merkmalen des unabhängigen Anspruchs 1 gelöst. Dieser enthält einen Verbund, der die folgenden Komponenten enthält:
(A) 5 bis 95 Gew.-% mindestens eines Trägermaterials bestehend aus Glasfasern, wobei das Trägermaterial ausgewählt ist aus der Gruppe bestehend aus Vliesen, Gelegen, Gewirken, Geweben und/oder Mischungen daraus;
(B) 5 bis 95 Gew.-% mindestens eines Glasplättchens mit einer mittleren Dicke von 0,05 µm bis 30 µm;
(C) 0 bis 95 Gew.-% mindestens eines Binders;

wobei sich die Komponenten (A), (B) und (C) auf 100 Gew.-% ergänzen und wobei der Batterieseparator eine Porosität im Bereich von 10 bis 70 % und eine Gesamtdicke von 0,01 mm bis 0,5 mm aufweist,
dadurch gekennzeichnet, dass die Glasplättchen (B) die folgende Zusammensetzung aufweisen:
   45 bis 55 Gew.-% SiO₂, 38 bis 45 Gew.-% B₂O₃, 5 bis 9 Gew.-% Na₂O, 0 bis 2 Gew.-% Al₂O₃ und 0 bis 1 Gew.-% ZrO₂ auf, wobei sich die Anteile der genannten Komponenten auf 100 Gew.-% ergänzen; oder
   45 bis 55 Gew.-% SiO₂, 38 bis 45 Gew.-% B₂O₃, 5 bis 9 Gew.-% Li₂O, 0 bis 2 Gew.-% Al₂O₃ und 0 bis 1 Gew.-% ZrO₂ auf, wobei sich die Anteile der genannten Komponenten auf 100 Gew.-% ergänzen.

Vorteilhafte Ausführungsformen des erfindungsgemäßen Batterieseparators werden in den abhängigen Ansprüchen 2 bis 11 angegeben.

Weiterhin betrifft die vorliegende Erfindung auch Verfahren zur Herstellung des erfindungsmäßen Separators. Entsprechende erfindungsgemäße Verfahren werden im unabhängigen Anspruch 12 angegeben.

Außerdem betrifft die vorliegende Erfindung gemäß dem Anspruch 13 auch Verwendungen der erfindungsgemäßen Batterieseparatoren in einer Batterie.

### Begriffsdefinitionen

Unter der "Porosität" im Sinne vorliegender Erfindung versteht man das Verhältnis von Hohlraumvolumen zu Gesamtvolumen. Sie wird bevorzugt bestimmt über Quecksilber-Porosimetrie.

Unter dem "Kontaktwinkel", oder auch "Benetzungswinkel" wird gemäß der vorliegenden Erfindung der Winkel verstanden den ein Flüssigkeitstropfen auf der Oberfläche eines Feststoffes zu dieser Oberfläche bildet. Dieser kann mit einem Kontaktwinkelmessgerät bestimmt werden.

Gemäß der vorliegenden Erfindung wird unter der "mittleren Kantenlänge" eines Glasplättchen (B) ein Viertel der Summe aller Kanten des Rechtecks verstanden, welches die Grundfläche des Glasplättchens definiert.

Unter der "Dicke" des Glasplättchens (B) wird gemäß vorliegender Erfindung die Länge der Kante des Glasplättchens verstanden, die senkrecht auf der Grundfläche steht. Gemäß der vorliegenden Erfindung meint die "mittlere Dicke" der Glasplättchen (B), dass 50 Gew.-% der Glasplättchen (B) eine "Dicke" aufweisen, die unterhalb des angegebenen Werts liegt, wohingegen die übrigen 50 Gew.-% eine Dicke aufweisen, die über dem angegebenen Wert liegt.

### Batterieseparator

In einer bevorzugten Ausführungsform der vorliegenden Erfindung beträgt der Anteil des Trägermaterials (A) im Verbund von 30 bis 95 Gew.-% und bevorzugt von 50 bis 95 Gew.-%.

Nach einer anderen bevorzugten Ausführungsform der vorliegenden Erfindung beträgt der Anteil der Glasplättchen (B) im Verbund 5 bis 70 Gew.-%, bevorzugt 5 bis 60 Gew.-% und insbesondere bevorzugt 5 bis 50 Gew.-%.

Eine weitere bevorzugte Ausführungsform der vorliegenden Erfindung sieht vor, dass der Anteil des Binders (C) im Verbund 0,01 bis 10 Gew.-% und bevorzugt 1 bis 5 Gew.-% beträgt.

Gemäß einer anderen bevorzugten Ausführungsform vorliegender Verbindung weist der Verbund die folgende Zusammensetzung auf:
(A) 30 bis 95 Gew.-% mindestens eines Trägermaterials bestehend aus Glasfasern ausgewählt aus der Gruppe bestehend aus Vliesen, Gelegen, Gewirken, Geweben und/oder Mischungen daraus;
(B) 5 bis 70 Gew.-% mindestens eines Glasplättchens mit einer mittleren Dicke von 0,05 µm bis 30 µm;
(C) 0,01 bis 10 Gew.-% mindestens eines Binders;
wobei sich die Komponenten (A), (B) und (C) auf 100 Gew.-% ergänzen.

Gemäß einer anderen bevorzugten Ausführungsform vorliegender Verbindung weist der Verbund die folgende Zusammensetzung auf:
(A) 50 bis 95 Gew.-% mindestens eines Trägermaterials bestehend aus Glasfasern ausgewählt aus der Gruppe bestehend aus Vliesen, Gelegen, Gewirken, Geweben und/oder Mischungen daraus;
(B) 5 bis 60 Gew.-% mindestens eines Glasplättchens mit einer mittleren Dicke von 0,05 µm bis 30 µm;
(C) 0,01 bis 5 Gew.-% mindestens eines Binders;
wobei sich die Komponenten (A), (B) und (C) auf 100 Gew.-% ergänzen.

Nach einer weiteren bevorzugten Ausführungsform der vorliegenden Erfindung ist der mindestens eine Binder (C) ein organisch-polymerbasierter Binder, der bevorzugt ausgewählt ist aus der Gruppe bestehend aus Polyvinylidenfluorid, modifizierte Cellulosen, insbesondere Carboxymethylcellulose (CMC), Methylhydroxyethylcellulose, Hydroxyethylcellulose, Methylhydroxypropyl-cellulose, Stärke, bevorzugt modifizierte Stärke, insbesondere bevorzugt Kartoffelstärke, besonders bevorzugt kaltwasserlösliche Stärke, insbesondere bevorzugt Hydroxypropylstärke, acetylierte Stärke, Phosphatstärke, oxidierte Stärke, Alginsäure, Guar, StyrolButadien-Kautschuk (SBR), Polyacrylsäure (PAA), Polymethylmethacrylsäure, Styrol-Acrylate, Vinylacetate, insbesondere Ethylen-Vinylacetate, Polyurethane, sowie Copolymere und Mischungen hiervon.

Gemäß einer ersten Ausführungsform der vorliegenden Erfindung weisen die Glasplättchen (B) 45 bis 55 Gew.-% SiO₂, 38 bis 45 Gew.-% B₂O₃, 5 bis 9 Gew.-% Na₂O, 0 bis 2 Gew.-% Al₂O₃ und 0 bis 1 Gew.-% ZrO₂ auf, wobei sich die Anteile der genannten Komponenten auf 100 Gew.-% ergänzen.

Eine andere erfindungsgemäße Ausführungsform vorliegender Erfindung sieht vor, dass die Glasplättchen (B) 45 bis 55 Gew.-% SiO₂, 38 bis 45 Gew.-% B₂O₃, 5 bis 9 Gew.-% Li₂O, 0 bis 2 Gew.-% Al₂O₃ und 0 bis 1 Gew.-% ZrO₂ aufweisen, wobei sich die Anteile der genannten Komponenten auf 100 Gew.-% ergänzen.

Die Glasplättchen (B) können durch spezielle Fertigungsverfahren, beispielsweise durch eine Rotationszerstäubung einer Glasschmelze hergestellt werden. Durch Anpassung der Prozessparameter können Glasplättchen (B) mit unterschiedlichen Dicken, insbesondere im Bereich für die mittlere Dicke von 0,05 bis 30 µm hergestellt werden.

Es können aber auch kommerziell verfügbare Glasplättchen (B) verwendet werden, diese sind beispielsweise von den Firmen Nippon Sheet Glass Co., Ltd. (JP) und Glassflake Ltd. (UK) erhältlich.

Die Eigenschaften von Gläsern lassen sich über deren Zusammensetzung in gewissen Grenzen einstellen. So sind Gläser unterschiedlich stabil in organischen Medien, beispielsweise einem organischen Elektrolyten bestehend aus Ethylencarbonat und Dimethylcarbonat als Lösungsmittel (Mischungsverhältnis 1:1) und Lithiumhexafluorophosphat (LiPF₆) als Leitsalz (1 mol/l).

Die folgende Tabelle zeigt einige Glastypen.

| **Komponenten** | **SiOz** | **B₂O₃** | **Na₂O** | **Li₂O** | **Al₂O₃** | **ZrO₂** | **BaO** |
|---|---|---|---|---|---|---|---|
| Typ 1 | 49.27 | 41.36 | 7.87 | | 1.00 | 0.5 | |
| Typ 2 | 49.27 | 41.36 | | 7.87 | 1.00 | 0.5 | |
| Typ 3 | 80.11 | | | 19.89 | | | |
| Typ 4* | 70 | 23 | 7 | | | | |
| Typ 5** | 55 | 10 | | | 10 | | 25 |

| | | | | | | | |
|---|---|---|---|---|---|---|---|
| die Angabe der Komponenten erfolgte in Gewichtsprozent; *: beschrieben in WO 2010/149265 A1; **: beschrieben in WO 2009/103537 A1. | | | | | | | |

Gläser der Typen 1 und 2 (vgl. Tabelle) können durch zyklische Belastung Ionen abgeben, bzw. das Glas der Glasplättchen fungiert als lonenaustauschmaterial. Im Falle von Glas von Typ 1 ist eine Freisetzung von Natrium-Ionen nachweisbar, welche die Zell-Performance erhöhen, indem die Leitfähigkeit der SEI (Solid Electrolyte Interface) durch Einlagerung dieser Ionen gesteigert wird. Weiterhin lässt sich eine sukzessive Minderung des Batteriezellen-Innenwiderstandes mit fortschreitender zyklischer Belastung feststellen. Glas des Typs 2 erlaubt die Alterung einer Batteriezelle, durch Freisetzung von Lithium zu verringern.

Bei Gläsern der Typen 1 und 2 handelt es sich um artverwandte, entmischbare Glassysteme.

Glas des Typs 3 setzt aufgrund der speziellen Glaszusammensetzung keine oder nur sehr wenige Ionen frei und ist somit im Elektrolyten als chemisch stabil anzusehen. Die Gläser gemäß der Typen 1 und 2 können ebenfalls als chemisch stabil angesehen werden, weisen jedoch auch eine elektrochemische Funktion auf.

Die Glastypen 4 bzw. 5 werden im Rahmen anderer Schutzrechte beschrieben. Glastyp 4 ist ähnlich wie Gläser der Typen 1 und 2 entmischbar. Dieses Glas wird aber als porös beschrieben, was bedeutet, dass die Natriumionen herausgelöst werden. Damit sind diese nicht mehr zum ionentausch und zur Teilnahme an Elektodenreaktionen verfügbar. Glastyp 5 weist keine Ionen, insbesondere Alkaliionen (Li/Na) auf, die für eine Interkalation in eine Graphitanode geeignet wären. Damit ist dieses Glas nicht geeignet Ionen zur Teilnahme an Elekrodenreaktion bereitzustellen und als inaktiv anzusehen.

Gemäß einer weiteren bevorzugten erfindungsgemäßen Ausführungsform ist das Trägermaterial (A) ein Glasvlies, wobei dieses Glasfasern aufweist, welche bevorzugt ausgewählt sind aus der Gruppe bestehend aus E-Glasfasern, C-Glasfasern, oder Glasfasern die eine Glaszusammensetzung aufweisen wie sie in obigen Ausführungsformen für die Glasplättchen (B) angegeben wurde und Mischungen hiervon.

Eine weitere bevorzugte erfindungsgemäße Ausführungsform sieht vor, dass das Trägermaterial (A) ein Glasgelege ist, wobei dieses Endlosglasfasern aufweist, welche bevorzugt ausgewählt sind aus der Gruppe bestehend aus E-Glasfasern, C-Glasfasern oder Glasfasern, die eine Glaszusammensetzung aufweisen wie sie in obigen Ausführungsformen für die Glasplättchen (B) angegeben wurde und Mischungen hiervon.

Liegt das Trägermaterial als Gelege vor, lassen sich neben unidirektionalen Gelegen auch multiaxiale Gelege bevorzugt einsetzen.

Nach einer anderen bevorzugten Ausführungsform vorliegender Erfindung weist der Batterieseparator eine hohe Benetzung gegenüber einer Elektrolytflüssigkeit auf, insbesondere beträgt der Kontaktwinkel zwischen der Elektrolytflüssigkeit und dem Separator <30°.

Eine weitere bevorzugte Ausführungsform der vorliegenden Erfindung sieht vor, dass der Batterieseparator eine Porosität im Bereich von 20 bis 60 % und bevorzugt 30 bis 55 % aufweist.

Gemäß einer anderen bevorzugten Ausführungsform der vorliegenden Erfindung weisen die Glasplättchen (B) eine mittlere Dicke im Bereich von 0,5 bis 20 µm und bevorzugt 1 bis 10 µm auf.

Dabei weisen bevorzugt auch mindestens 98 Gew.-% der Glasplättchen (B) eine mittlere Kantenlänge von <45 µm und besonders bevorzugt < 31 µm auf und mindestens 99 Gew.-% der Glasplättchen (B) weisen eine mittlere Kantenlänge von < 50 µm und bevorzugt < 32 µm auf.

Eine andere bevorzugte Ausführungsform der vorliegenden Erfindung betrifft einen Batterieseparator, der eine Dicke im Bereich von 0,02 bis 0,3mm und bevorzugt 0,05 bis 0,2 mm aufweist.

Nach einer weiteren bevorzugten Ausführungsform der vorliegenden Erfindung weist der Batterieseparator eine Porosität im Bereich von 20 bis 60 % und bevorzugt 30 bis 55 % auf und die Glasplättchen (B) weisen eine mittlere Dicke im Bereich von 0,05 bis 20 µm und bevorzugt 1 bis 10 µm auf und der Batterieseparator weist eine Dicke im Bereich von 0,02 bis 0,3 mm und bevorzugt 0,05 bis 0,2 mm auf.

Gemäß einer weiteren bevorzugten Ausführungsform vorliegender Erfindung besteht der Batterieseparator aus dem Verbund.

Nach einer anderen bevorzugten Ausführungsform der vorliegenden Erfindung besteht der Verbund aus den Komponenten (A) bis (C).

Eine andere bevorzugte Ausführungsform vorliegender Erfindung sieht vor, dass der Batterieseparator aus dem Verbund besteht und dieser Verbund aus den Komponenten (A) bis (C) besteht.

Gemäß einer anderen bevorzugten Ausführungsform vorliegender Erfindung sind die Glasplättchen (B) in einer Ziegelmauerstruktur in das Trägermaterial, bevorzugt in ein Glasvlies, integriert. Durch diese spezielle Struktur wird zum Einen beim Einsatz in einer Batterie eine gute Benetzung mit dem Elektrolyten und Permeabilität für Ionen aus dem Elektrolyten gewährleistet. Zum Anderen wird eine hohe Stabilität bei hohen Temperaturen und zeitgleich, insbesondere durch den Einsatz von Mikrometer-Glasplättchen und Glasvliesen eine hohe mechanische Flexibilität und Stabilität gewährleistet.

Eine weitere bevorzugte Ausführungsform vorliegender Erfindung sieht vor, dass die Glasplättchen (B) ein Aspektverhältnis im Bereich von 1 : 3 bis 1 : 100, bevorzugt im Bereich von 1 : 5 bis 1 : 20 aufweisen.

Nach einer weiteren Ausführungsform der vorliegenden Erfindung beträgt der Schrumpf des Batterieseparators, wenn dieser für 60 Minuten einer Temperaturen von 500 °C ausgesetzt wird, weniger als 2 %.

### Verfahren zur Herstellung des Batterieseparators

Das erfindungsgemäße Verfahren zur Herstellung eines Batterieseparators umfasst die folgenden Schritte:
(a) Bereitstellen eines Trägermaterials (A);
(b) Bereitstellen von Glasplättchen (B);
(c) Einbringen der Glasplättchen (B) in das Trägermaterial (A) über ein Verfahren ausgewählt aus der Gruppe bestehend aus Filmziehen, Luftrakel, Walzenrakel, Reverse Roll Coating, Kiss Coating, Pflatschauftrag, Foulardauftrag, Schablonen Siebdruck, Flachbettsiebdruck, Curtain Coating, Sprühdüsenauftrag, Rasterdruck oder über Kalandrieren, wonach ein Batterieseparator erhalten wird;
(d) Trocknen des Batterieseparators aus Schritt (c).

Die erfindungsgemäßen Batterieseparatoren können also in einem einfachen Rolle-zu-Rolle-Verfahren gefertigt werden. Zur Trocknung gemäß Schritt (d) ist es bevorzugt an der Luft zu trocknen. Insbesondere bei einem hohen Anteil des Binders (C) im Verbund, muss das Anlegen von Vakuum zum Trocknen unterlassen werden. Ansonsten besteht die Gefahr der Bildung von Rissen. Für geringe Binderanteile können aber auch Vakuumtrockentechnik angewendet werden.

Eine bevorzugte Variante des erfindungsgemäßen Verfahrens sieht vor, dass zunächst auf einem Substrat, insbesondere eine Folie oder ein Papier, ein Film der Glasplättchen (B) mit dem Binder (C) und dem Trägermaterial (A) aufgetragen und getrocknet wird. Dieser Film kann beim Einbringen des Batterieseparators in eine Batterie vom Substrat wieder abgelöst werden.

### Verwendung

Die erfindungsgemäße Verwendung sieht vor, dass der erfindungsgemäße Batterieseparator in einer Batterie umfassend zumindest einen Elektrolyten und zumindest 2 Elektroden verwendet wird.

Nach einer bevorzugten Ausführungsform der vorliegenden Erfindung werden Natrium- und/oder Lithiumionen aus den Glasplättchen (B) im Elektrolyten gelöst und partizipieren an Elektrodenreaktionen.

Grundsätzlich können die erfindungsgemäßen Batterieseparatoren in allen Batterien verwendet werden, die Elektrolyten verwenden gegen welche Glas beständig ist, bevorzugt sind aber Lithium-Ionen-Batterien.

### Beschreibung der Figuren

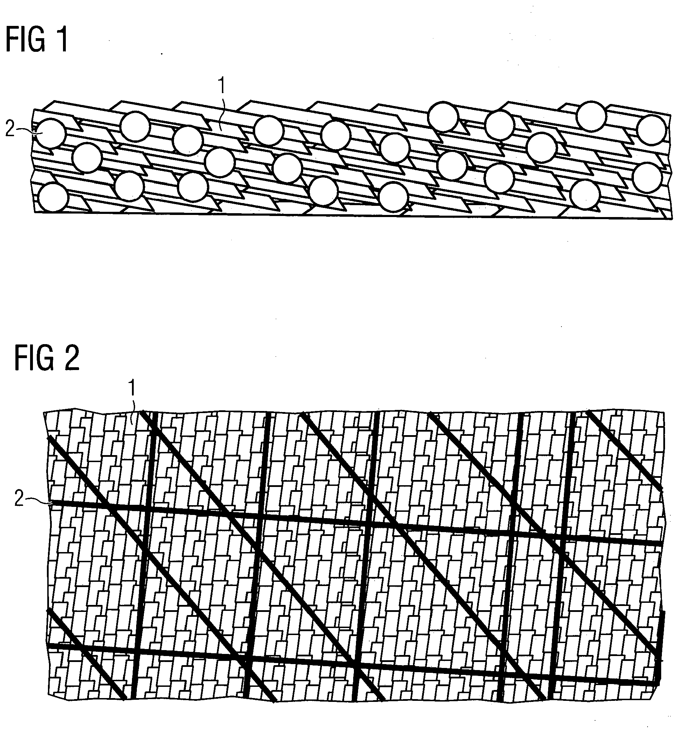

Figur 1 ist die schematische Darstellung (Seitenansicht) von in Glasvliesen (mit dem Bezugszeichen 2 gekennzeichnet) integrierten Mikrometer-Glasplättchen (mit dem Bezugszeichen 1 gekennzeichnet) in einer Ziegelmauerstruktur, Figur 2 bildet die entsprechende Draufsicht ab.
Figur 3 zeigt die lonenleitfähigkeit des erfindungsgemäßen Batterieseparators im Vergleich mit einem Polymer-basierten Separator (b) und einem Polymer-Keramik-basierten Separator.
Figur 4 bildet die Kontaktwinkel des erfindungsgemäßen Batterieseparators (a), eines Polymer-basierten Separators (b) und eines Polymer-Keramik-basierten Separators (c) ab.
Figur 5 zeigt die stromstärkeabhängige Belastung einer Graphit - Lithiumeisenphosphat Vollzelle mit einem erfindungsgemäßen Batterieseparator.
Figur 6 bildet die zyklische Belastung einer Graphit - Lithiumeisenphosphat Vollzelle mit einem erfindungsgemäßen Batterieseparator über 100 Zyklen ab.
Figur 7 zeigt den jeweiligen Schrumpf unter Temperatureinfluss des erfindungsgemäßen Batterieseparators im Vergleich zu einem Polymer-basierten Separator und einem Polymer-Keramik-basierten Separator.

### Experimenteller Teil

Das folgende Ausführungsbeispiel dient dazu die Erfindung besser zu illustrieren, ist aber in keiner Weise als einschränkend anzusehen.

Für das Ausführungsbeispiel wurde ein Glas mit folgender Zusammensetzung verwendet (entspricht Typ 1 aus der Tabelle in der allgemeinen Beschreibung):

| | |
|---|---|
| SiO₂: | 49,27 Gew.-% |
| B₂O₃: | 41,36 Gew.-% |
| Na₂O: | 7,87 Gew.-% |
| Aₗ₂O₃. | 1,00 Gew.-% |
| ZrO₂: | 0,5 Gew.-% |

### Bestimmung der Porosität

Die Porosität des hergestellten Separators wurde über Quecksilber-porosimetrie auf einem Micromeritics AutoPore III (Messmethode: Quecksilber Porosimetrie, Parameter: 0,004 bis 393 MPa, Kontaktwinkel 130°) bestimmt.

### Bestimmung der mittleren Dicke der Glasplättchen (B)

Zur Bestimmung der Dicke der Glasplättchen (B) wurden diese in ein Epoxidharz (EpoFix Resin; Struers A/S) eingebettet. Die Glasplättchen wurden dann anhand RasterelektronenmikroskopaufnahmenR (Jeol JSM-840A) vermessen, wobei der angegebene Wert dem Mittelwert aus 100 Messungen entspricht.

### Glasplättchenherstellung

Ein Glas mit der oben angegebenen Zusammensetzung wurde in einer Glasschmelzanlage bei einer Temperatur von 1350°C geschmolzen, wobei eine Heizrate von 10°C/min und eine Haltezeit von 2 Stunden bei 1350°C gewählt wurde. Über einen Drain wurde ein definierter Durchsatz (200-1000 kg/d) für den in den Rotationszerstäuber fließenden Glasstrang eingestellt. Dadurch ist es möglich, unterschiedlich dicke Glasplättchen (Glasflakes) zu erzeugen. Durch Rotation der mit 800°C vorbeheizten Zerstäubereinheit mit 10000 rpm wird die eingegossene Glasschmelze durch Zentrifugalkräfte über den Rand der Zerstäubereinheit ausgetragen und in Form eines Films (Lamelle) gestreckt bis zum Glasbruch. Die schlussendliche plättchenförmige Form wird durch Zerkleinerung der durch den beschriebenen Prozess erzeugten Glasplättchen-Gebinde erreicht. Danach wurden die Glasplättchen klassiert (Aussortierung von mehr als 98 Gew.-% der Plättchen mit einer mittleren Kantenlänge von 32 µm oder größer erfolgt über ein Sieb), wonach Glasplättchen erhalten wurden deren mittlere Dicke 7 µm betrug, wobei mehr als 98 Gew.-% der Glasplättchen eine mittlere Kantenlänge von <32 µm aufwiesen.

### Herstellung der Suspension

Die wie oben beschrieben hergestellten Glasplättchen wurden im Gewichtsverhältnis 50:1 mit einem Binder vermengt. Der Anteil des Binders ist dabei auf die Reinsubstanz ohne das Lösemittel angegeben. Dabei kam ein bereits vorgefertigter Binder (modifizierte Kartoffelstärke, kaltwasserlöslich mit <0,1 Gew.-% Biozid) mit einem wässrigen Lösungsmittel in einem Gewichtsverhältnis von Binder : Stärke = 1:9 zum Einsatz. Das Mischungsverhältnis wurde gewählt, damit die Verarbeitbarkeit über ein Rakelverfahren möglich war (siehe Herstellung des Separator-Verbundes). Vermischt wurden die Komponenten über einen Rotationsmischer für 2 bis 10 Minuten mit einer Umdrehungsgeschwindigkeit von 1000 bis 1500 Umdrehungen pro Minute.

### Herstellung des Glasvlies-Glasplättchen-Verbundes

Die wie oben beschrieben hergestellte Glasplättchen-Bindermasse wurde über ein Rakelverfahren, in ein Glasvlies (Owens Corning, 35g/m² Vlies) integriert. Das gewählte Gewichtsverhältnis von Glasplättchen-Bindermasse : Glasvlies betrug dabei 1:1.

Dabei wurde eine automatische Vorschubgeschwindigkeit von 2,5 mm/s gewählt und die Höhe des Rakels auf die Höhe des Glasvlieses eingestellt. Damit wurde eine vollständige Integration der Glasplättchen in das Glasvlies erreicht und zugleich eine oberflächliche Beschichtung vermieden. Nach dem Integrationsprozess wurde der erfindungsgemäße Glas-Composite-Separator an Luft getrocknet.

Der erhaltene Batterieseparator welcher sich zu 49.5 Gew.-% aus Glasvlies, 49.5 Gew.-% aus Glasplättchen und einem Prozent an Binder zusammensetzt wies eine Porosität von 35,74 % und eine Dicke von 0,243 mm auf.

Dem Fachmann ist bekannt, dass um die beschriebenen, klassierten Glasplättchen vollständig in ein Glasvlies integrieren zu können, abhängig von der Viskosität der Glasplättchen-Binder-Suspension, der Verarbeitungsgeschwindigkeit, der mittleren Glasplättchen-Kantenlänge und -dicke und der Beschaffenheit (Größe der Faserzwischenräume / Dicke) des Glasvlieses jeweils eine Anpassung der Verfahrens- und Materialparameter erforderlich ist. Das erfindungsgemäße Beispiel gibt einen konkreten Weg zur Ausführung der Erfindung vor.

### Elektrochemische Messungen

Elektrochemische Messungen wurden anhand einer gasdichten Messzelle, aufgebaut aus Swagelokteilen, durchgeführt. Der Zellbau erfolgte unter Inergasatmosphäre in einer Handschuhbox. Hierbei wurden zunächst eine Elektrode und darauf der erfindungsgemäße Batterieseparator Separator in die Zelle gelegt und mit Elektrolyt (1:1 Mischung aus Ethylencarbonat und Dimethylcarbonat mit 1 mol/l Lithiumhexafluorophosphat) benetzt. Komplettiert wurde der Zellaufbau mit einer entsprechenden Gegenelektrode, einem Metallblech und einer Metallfeder, bevor die Zelle gasdicht verschlossen wurde.

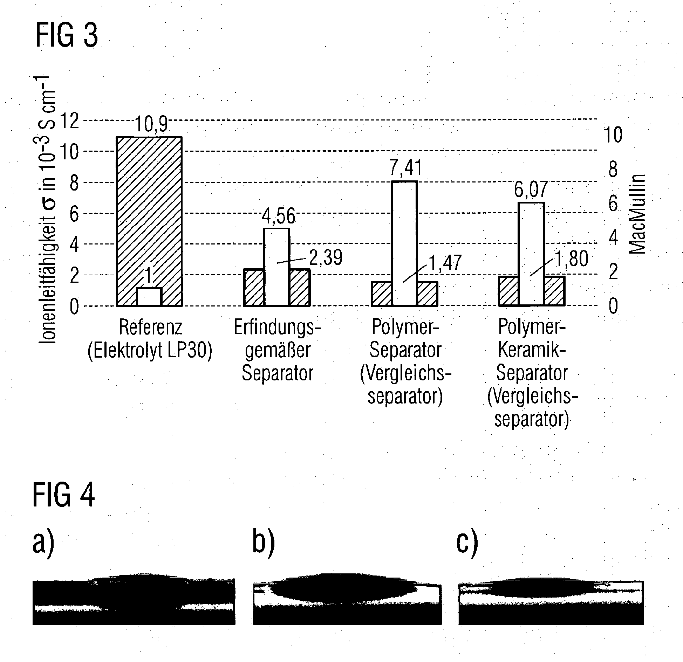

Durchgeführt wurden Impedanzanalysen im Frequenzbereich von 1 mHz bis 1 MHz, sowie Be- und Entladungen mit Stromraten von 1-10 C bei einer Entladetiefe von 0-100 %, wobei sich herausstellte, dass die mit den oben beschriebenen erfindungsgemäßen glasbasierten Separatoren ausgestatteten Zellen hervorragende elektrochemische Eigenschaften zeigen. Die Leitfähigkeit von beispielsweise Lithium-Ionen durch den erfindungsgemäßen Separator ist im Allgemeinen um bis zu 60 % höher als die Leitfähigkeit durch Polymer-basierte Separatoren nach dem Stand der Technik (vgl. Figur 3). Dies liegt an den größeren Porendurchmessern, die im Bereich von 0,1 bis 5µm gemessen wurden und der somit einhergehenden optimierten Diffusion von Ionen durch den Separator. Weiterhin konnte eine hervorragende Benetzung mit Elektrolyten festgestellt werden, nachdem eine definierte Menge des Elektrolytlösungsmittels Dimethylcarbonat instantan, in das Glasvlies-Glasplättchen-Komposit aufgenommen wurde (z.B. 10 µl Dimethylcarbonat, vollständige Aufnahme binnen 50 ms; Probe im 12 mm Coin-Format). Um die Benetzung quantifizieren zu können, wurden zudem Kontaktwinkelmessungen durchgeführt, bei der das im Lösungsmittel des eingesetzten Elektrolyten vorkommende Dimethylcarbonat mit einer definierten Menge auf die Membranen gegeben wurde. Der Kontaktwinkel wurde 25 ms nach Berührung des Tropfens mit der Membran gemessen (vgl. Figur 4). Dies war nötig, da der Tropfen beim erfindungsgemäßen Batterieseparator bereits nach 50 ms vollständig in die Membran aufgenommen wurde und eine Messung des Kontaktwinkels somit nicht mehr möglich war.

Weiterhin konnte festgestellt werden, dass nach fortschreitender zyklischer Belastung von mit den erfindungsgemäßen Batterieseparatoren ausgestatteten Testzellen eine Verringerung kapazitiver Widerstände eintrat. Durch das spezielle verwendete Glas (Typ 1 wie oben angegeben) erfolgte im Elektrolyten ein lonenaustausch. Bei diesem Prozess wurden Natrium-Ionen freigesetzt und diese lagen im Elektrolyten als Additiv vor. Diese Ionen lagerten sich in die gebildete SEI (Solid Electrolyte Interface) ein und erhöhten deren Leitfähigkeit für Lithium-Ionen. Bestätigt werden konnte dieses Verhalten durch Post-Mortem Untersuchungen von Testzellen, welcher zyklischer Belastungstests von mindestens 250 Vollzyklen mit einer 1C-Rate (100% DOD) ausgesetzt waren. Hierbei konnte eine Verringerung des Natriumgehaltes in den Glasplättchen im Separator und ein entsprechender Anteil auf der verwendeten Graphitelektrode detektiert werden.

Weiterhin konnte eine sukzessive Verringerung des Batteriezellen-Innenwiderstandes mit fortschreitender Zyklenanzahl festgestellt werden.

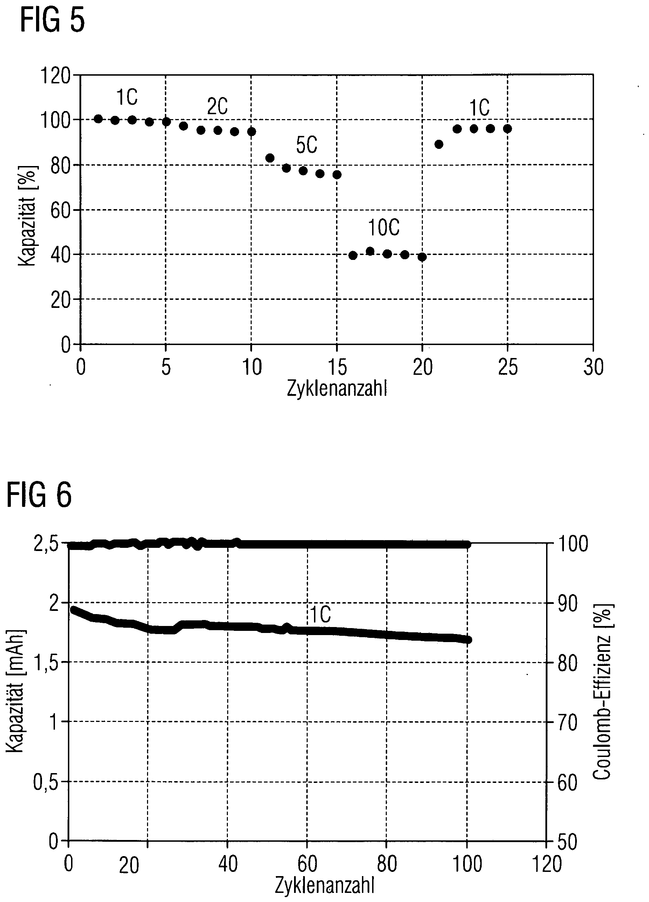

Bei zyklischen Belastungstests von Testzellen mit glasbasierten Separatoren konnte festgestellt werden, dass zum Einen eine hohe Zyklenstabilität erreicht werden konnte (Coulomb-Effizienz > 99,9 % bei 1C Strombelastung; Be- und Entladung binnen einer Stunde; vgl. Figur 6) und zum anderen die Testzellen auch mit weitaus höheren Strömen belastet werden konnten, ohne dass der Separator hierbei einen limitierenden Faktor darstellt. So konnte bei einer Strombelastung von 10 C (vollständige Be- und Entladung der Testzelle binnen 6 Minuten) noch sehr gute 40 % der nominellen Kapazität be- und entladen werden, wobei hierbei die Be- und Entladefähigkeit des Aktivmaterials den hauptsächlich limitierenden Faktor darstellte. Dies zeigt, dass die beschriebene Entwicklung auch für Batterien im Schnellladebetrieb eingesetzt werden können (vgl. Figur 5).

### Thermische Stabilität

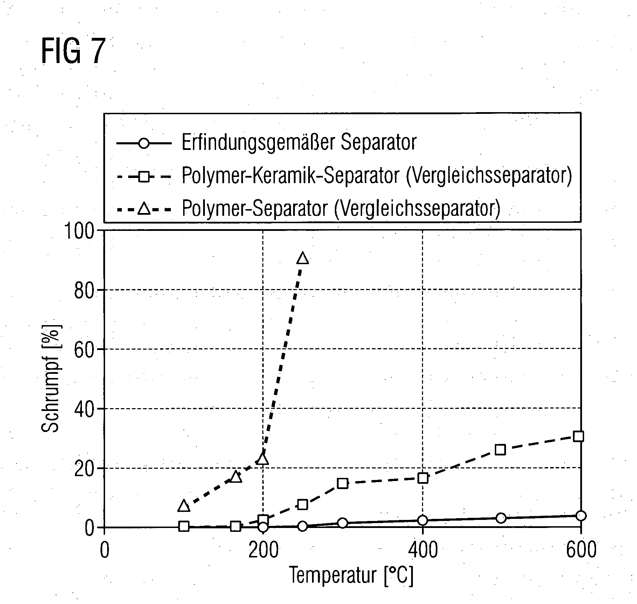

Zur Untersuchung der thermischen Stabilität wurden die erfindungsgemäßen Batterieseparatoren (Abmessungen der Probe: 30 x 30 mm) bei einer Aufheizrate von 5°C/Minute bei einer Haltezeit von jeweils 60 Minuten bis 600°C erhitzt (Hot-Ofen-Test). Dabei konnte kein signifikanter Schrumpf (<2% bei 500°C) festgestellt werden. Zudem blieb die mechanische Integrität durch das Glasvlies größtenteils erhalten, wobei Polymer-basierte Separatoren hier ab spätestens 250°C schmelzen (siehe Figur 7). Weiterhin konnte der beschriebene erfindungsgemäße Separator beim sog. Hot-Punch-Test nicht mit einem heißen Dorn (2 mm Durchmesser, 200°C) bei einem Druck von bis zu 1,5 kg/mm² durchstoßen werden. Polymer-basierte Separatoren nach dem Stand der Technik schmelzen hierbei auf.

## Patentansprüche

1. Batterieseparator enthaltend einen Verbund, enthaltend die folgenden Komponenten:
(A) 5 bis 95 Gew.-% mindestens eines Trägermaterials bestehend aus Glasfasern, wobei das Trägermaterial ausgewählt ist aus der Gruppe bestehend aus Vliesen, Gelegen, Gewirken, Geweben und/oder Mischungen daraus;
(B) 5 bis 95 Gew.-% mindestens eines Glasplättchens mit einer mittleren Dicke von 0,05 µm bis 30 µm;
(C) 0 bis 95 Gew.-% mindestens eines Binders;
wobei sich die Komponenten (A), (B) und (C) auf 100 Gew.-% ergänzen und wobei der Batterieseparator eine Porosität im Bereich von 10 bis 70 % und eine Gesamtdicke von 0,01 mm bis 0,5 mm aufweist,
**dadurch gekennzeichnet, dass** die Glasplättchen (B) die folgende Zusammensetzung aufweisen:
45 bis 55 Gew.-% SiO₂, 38 bis 45 Gew.-% B₂O₃, 5 bis 9 Gew.-% Na₂O, 0 bis 2 Gew.-% Al₂O₃ und 0 bis 1 Gew.-% ZrO₂ auf, wobei sich die Anteile der genannten Komponenten auf 100 Gew.-% ergänzen; oder
45 bis 55 Gew.-% SiO₂, 38 bis 45 Gew.-% B₂O₃, 5 bis 9 Gew.-% Li₂O, 0 bis 2 Gew.-% Al₂O₃ und 0 bis 1 Gew.-% ZrO₂ auf, wobei sich die Anteile der genannten Komponenten auf 100 Gew.-% ergänzen.

2. Batterieseparator nach Anspruch 1, **dadurch gekennzeichnet, dass**
der Anteil des Trägermaterials (A) im Verbund 30 bis 95 Gew.-%, bevorzugt 50 bis 95 Gew.-% beträgt; und/oder
der Anteil der Glasplättchen (B) im Verbund 5 bis 70 Gew.-%, bevorzugt 5 bis 60 Gew.-% und insbesondere bevorzugt 5 bis 50 Gew.-% beträgt; und/ oder
der Anteil des Binders (C) im Verbund 0,01 bis 10 Gew.-%, bevorzugt 1 bis 5 Gew.-% beträgt.

3. Batterieseparator nach Anspruch 1 oder 2, **dadurch gekennzeichnet, dass** der mindestens eine Binder (C) ein organisch-polymerbasierter Binder ist, der bevorzugt ausgewählt ist aus der Gruppe bestehend aus Polyvinylidenfluorid, modifizierte Cellulosen, insbesondere Carboxymethylcellulose (CMC), Methylhydroxyethylcellulose, Hydroxyethylcellulose, Methylhydroxypropylcellulose, Stärke, bevorzugt modifizierte Stärke, besonders bevorzugt kaltwasserlösliche Stärke, insbesondere bevorzugt Kartoffelstärke, Hydroxypropylstärke, acetylierte Stärke, Phosphatstärke, oxidierte Stärke, Alginsäure, Guar, Styrol-Butadien-Kautschuk (SBR), Polyacrylsäure (PAA), Polymethylmethacrylsäure, Styrol-Acrylate, Vinylacetate, insbesondere Ethylen-Vinylacetate, Polyurethane, sowie Copolymere und Mischungen hiervon.

4. Batterieseparator nach einem der vorhergehenden Ansprüche,
**dadurch gekennzeichnet, dass** das Trägermaterial (A) ein Glasvlies ist, wobei dieses Glasfasern aufweist, welche bevorzugt ausgewählt sind aus der Gruppe bestehend aus E-Glasfasern, C-Glasfasern oder Glasfasern, die eine Glaszusammensetzung aufweisen, wie sie in Anspruch 1 für die Glasplättchen (B) angegeben wurde und Mischungen hiervon.

5. Batterieseparator nach einem der vorhergehenden Ansprüche,
**dadurch gekennzeichnet, dass** das Trägermaterial (A) ein Glasgelege ist, wobei dieses Endlosglasfasern aufweist, welche bevorzugt ausgewählt sind aus der Gruppe bestehend aus E-Glasfasern, C-Glasfasern oder Glasfasern, die eine Glaszusammensetzung aufweisen, wie sie in Anspruch 1 für die Glasplättchen (B) angegeben wurde und Mischungen hiervon.

6. Batterieseparator nach einem der vorhergehenden Ansprüche,
**dadurch gekennzeichnet, dass** dieser eine hohe Benetzung gegenüber einer Elektrolytflüssigkeit aufweist, wobei der Kontaktwinkel zwischen der Elektrolytflüssigkeit und dem Batterieseparator <30° beträgt.

7. Batterieseparator nach einem der vorhergehenden Ansprüche,
**dadurch gekennzeichnet, dass** dieser eine Porosität im Bereich von 20 bis 60 % und bevorzugt 30 bis 60 % aufweist; und/oder
die Glasplättchen (B) eine mittlere Dicke im Bereich von 0,5 bis 20 µm und bevorzugt 1 bis 10 µm aufweisen; und/oder
mindestens 98 Gew.-% der Glasplättchen (B) eine mittlere Kantenlänge von <45 µm und bevorzugt < 31 µm aufweisen; und/oder
mindestens 99 Gew.-% der Glasplättchen (B) eine mittlere Kantenlänge von < 50 µm und bevorzugt < 32 µm aufweisen; und/oder
der Batterieseparator eine Dicke im Bereich von 0,02 bis 0,3 mm und bevorzugt 0,05 bis 0,2 mm aufweist.

8. Batterieseparator nach einem der vorhergehenden Ansprüche,
**dadurch gekennzeichnet, dass** der Batterieseparator aus dem Verbund besteht; und/oder der Verbund aus den Komponenten (A) bis (C) besteht.

9. Batterieseparator nach einem der vorhergehenden Ansprüche,
**dadurch gekennzeichnet, dass** die Glasplättchen (B) in einer Ziegelmauerstruktur in das Trägermaterial, bevorzugt in ein Glasvlies, integriert sind.

10. Batterieseparator nach einem der vorhergehenden Ansprüche,
**dadurch gekennzeichnet, dass** die Glasplättchen (B) ein Aspektverhältnis im Bereich von 1 : 3 bis 1 : 100, bevorzugt im Bereich von 1 : 5 bis 1 : 20 aufweisen.

11. Batterieseparator nach einem der vorhergehenden Ansprüche,
**dadurch gekennzeichnet, dass** der Schrumpf des Batterieseparators, wenn dieser für 60 Minuten einer Temperaturen von 500 °C ausgesetzt wird, weniger als 2 % beträgt.

12. Verfahren zur Herstellung eines Batterieseparators nach einem der Ansprüche 1 bis 11, umfassend die folgenden Schritte:
(a) Bereitstellen eines Trägermaterials (A)
(b) Bereitstellen von Glasplättchen (B)
(c) Einbringen der Glasplättchen (B) in das Trägermaterial (A) über ein Verfahren ausgewählt aus der Gruppe bestehend aus Filmziehen, Luftrakel, Walzenrakel, Reverse Roll Coating, Kiss Coating, Pflatschauftrag, Foulardauftrag, Schablonen Siebdruck, Flachbettsiebdruck, Curtain Coating, Sprühdüsenauftrag, Rasterdruck oder über Kalandrieren, wonach ein Batterieseparator erhalten wird;
(d) Trocknen des Batterieseparators aus Schritt (c).

13. Verwendung eines Batterieseparators gemäß einem der Ansprüche 1 bis 11 in einer Batterie umfassend zumindest einen Elektrolyten und zumindest 2 Elektroden.

## Claims

1. A battery separator comprising a composite, comprising the following components:
(A) 5 to 95% by weight of at least one carrier material consisting of glass fibres, the carrier material being selected from the group consisting of nonwovens, layered fabrics, knitted fabrics, woven fabrics and/or mixtures thereof;
(B) 5 to 95% by weight of at least one glass flake with an average thickness of 0.05 µm to 30 µm;
(C) 0 to 95% by weight of at least one binder;
wherein components (A), (B) and (C) add up to 100% by weight, and wherein the battery separator has a porosity in the range of 10 to 70% and a total thickness of 0.01 mm to 0.5 mm,
**characterized in that** the glass flakes (B) have the following composition:
45 to 55% by weight of SiO₂, 38 to 45% by weight of B₂O₃, 5 to 9% by weight of Na₂O, 0 to 2% by weight of Al₂O₃ and 0 to 1% by weight of ZrO₂, the proportions of the mentioned components adding up to 100% by weight, or
45 to 55% by weight of SiO₂, 38 to 45% by weight of B₂O₃, 5 to 9% by weight of Li₂O, 0 to 2% by weight of Al₂O₃ and 0 to 1% by weight of ZrO₂, the proportions of the mentioned components adding up to 100% by weight.

2. The battery separator according to claim 1, **characterized in that**
the proportion of the carrier material (A) in the composite is 30 to 95% by weight, preferably 50 to 95% by weight; and/or
the proportion of glass flakes (B) in the composite is 5 to 70% by weight, preferably 5 to 60% by weight and particularly preferably 5 to 50% by weight; and/or
the proportion of binder (C) in the composite is 0.01 to 10% by weight, preferably 1 to 5% by weight.

3. The battery separator according to one of claims 1 or 2, **characterized in that** the at least one binder (C) is an organic-polymer-based binder, which is preferably selected from the group consisting of polyvinylidene fluoride, modified celluloses, in particular carboxymethylcellulose (CMC), methylhydroxyethylcellulose, hydroxyethylcellulose, methylhydroxypropylcellulose, starch, preferably modified starch, particularly preferably cold-water soluble starch, particularly preferably potato starch, hydroxypropyl starch, acetylated starch, phosphate starch, oxidised starch, alginic acid, guar gum, styrene-butadiene rubber (SBR), polyacrylic acid (PAA), polymethylmethacrylic acid, styrene acrylates, vinyl acetates, in particular ethylene vinyl acetates, polyurethanes, and also copolymers and mixtures hereof.

4. The battery separator according to one of the preceding claims, **characterized in that** the carrier material (A) is a glass nonwoven, the latter having glass fibres which are preferably selected from the group consisting of E glass fibres, C glass fibres or glass fibres which have a glass composition as was indicated in claim 1 for the glass flakes (B), and mixtures thereof.

5. The battery separator according to one of the preceding claims, **characterized in that** the carrier material (A) is a glass-fibre fabric, the latter having endless glass fibres which are preferably selected from the group consisting of E glass fibres, C glass fibres or glass fibres which have a glass composition as was indicated in claim 1 for the glass flakes (B), and mixtures hereof.

6. The battery separator according to one of the preceding claims, **characterized in that** the latter has high wetting relative to an electrolyte liquid, wherein the contact angle between the electrolyte liquid and the separator is <30°.

7. The battery separator according to one of the preceding claims, **characterized in that** the latter has a porosity in the range of 20 to 60%, and preferably 30 to 60%; and/or
the glass flakes (B) have an average thickness in the range 0.5 to 20 µm and preferably 1 to 10 µm; and/or
at least 98% by weight of the glass flakes (B) have an average edge length of < 45 µm and particularly preferably < 31 µm; and/or
at least 99% by weight of the glass flakes (B) have an average edge length of < 50 µm and preferably < 32 µm; and/or
the battery separator has a thickness in the range of 0.02 to 0.3 mm and preferably 0.05 to 0.2 mm.

8. The battery separator according to one of the preceding claims, **characterized in that** the battery separator consists of the composite; and/or the composite consists of components (A) to (C).

9. The battery separator according to one of the preceding claims, **characterized in that** the glass flakes (B) are integrated in a brick wall structure in the carrier material, preferably in a glass nonwoven.

10. The battery separator according to one of the preceding claims, **characterized in that** the glass flakes (B) have an aspect ratio in the range of 1 : 3 to 1 : 100, preferably in the range of 1 : 5 to 1 : 20.

11. The battery separator according to one of the preceding claims, **characterized in that** the shrinkage of the battery separator, if the latter is subjected to a temperature of 500°C for 60 minutes, is less than 2%.

12. A method for the production of a battery separator according to one of the claims 1 to 11, comprising the following steps:
(a) providing a carrier material (A)
(b) providing glass flakes (B)
(c) introducing the glass flakes (B) into the carrier material (A) via a method selected from the group consisting of film-drawing, air doctoring, roll-doctoring, reverse roll coating, kiss coating, spattering coating, scarf application, template screen printing, flatbed screen printing, curtain coating, spray nozzle application, halftone printing or via calendering, after which a battery separator is obtained; and
(d) drying the battery separator from step (c).

13. Use of a battery separator according to one of the claims 1 to 11 in a battery comprising at least one electrolyte and at least 2 electrodes.

## Revendications

1. Séparateur de batterie contenant un composite contenant les composants suivants :
(A) 5 à 95 % en poids d'au moins un matériau support constitué de fibres de verre, le matériau support étant choisi dans le groupe constitué par des non-tissés, des nappes, des tissus maillés, des tissus tissés et/ou des mélanges de ceux-ci ;
(B) 5 à 95 % en poids d'au moins une plaquette de verre d'une épaisseur moyenne de 0,05 µm à 30 µm ;
(C) 0 à 95 % en poids d'au moins un liant ;
dans lequel les composants (A), (B) et (C) se complètent à 100 % en poids, et dans lequel le séparateur de batterie a une porosité située dans la plage de 10 à 70 % et une épaisseur totale de 0,01 mm à 0,5 mm,
**caractérisé en ce que** les plaquettes de verre (B) présentent la composition suivante :
45 à 55 % en poids de SiO₂, 38 à 45 % en poids de B₂O₃, 5 à 9 % en poids de NazO, 0 à 2 % en poids de Al₂O₃ et 0 à 1 % en poids de ZrOz, les proportions des composants mentionnés se complétant à 100 % en poids ; ou
45 à 55 % en poids de SiO₂, 38 à 45 % en poids de B₂O₃, 5 à 9 % en poids de Li₂O, 0 à 2 % en poids de Al₂O₃ et 0 à 1 % en poids de ZrO₂, les proportions des composants mentionnés se complétant à 100 % en poids.

2. Séparateur de batterie selon la revendication 1, **caractérisé en ce que**
la proportion du matériau support (A) dans le composite est de 30 à 95 % en poids, de préférence de 50 à 95 % en poids ; et/ou
la proportion de plaquettes de verre (B) dans le composite est de 5 à 70 % en poids, de préférence de 5 à 60 % en poids et de manière particulièrement préférée de 5 à 50 % en poids ; et/ou
la proportion du liant (C) dans le composite est de 0,01 à 10 % en poids, de préférence de 1 à 5 % en poids.

3. Séparateur de batterie selon la revendication 1 ou 2, **caractérisé en ce que** le au moins un liant (C) est un liant à base de polymère organique, de préférence choisi dans le groupe constitué par le fluorure de polyvinylidène, les celluloses modifiées, en particulier la carboxyméthylcellulose (CMC), la méthylhydroxyéthylcellulose, l'hydroxyéthylcellulose, la méthylhydroxypropylcellulose, l'amidon, de préférence l'amidon soluble dans l'eau froide, de manière particulièrement préférée l'amidon de pomme de terre, l'hydroxypropylamidon, l'amidon acétylé, l'amidon phosphaté, l'amidon oxydé, l'acide alginique, le guar, le caoutchouc styrène-butadiène (SBR), l'acide polyacrylique (PAA), l'acide polyméthylméthacrylique, le styrène acrylate, les acétates de vinyle, notamment éthylène-acétate de vinyle, les polyuréthanes, ainsi que leurs copolymères et mélanges.

4. Séparateur de batterie selon l'une quelconque des revendications précédentes, **caractérisé en ce que** le matériau support (A) est un voile de verre, lequel comprend des fibres de verre qui sont de préférence choisies dans le groupe constitué par des fibres de verre E, des fibres de verre C ou des fibres de verre présentant une composition de verre telle que spécifiée dans la revendication 1 pour les plaquettes de verre (B) et des mélanges de celles-ci.

5. Séparateur de batterie selon l'une quelconque des revendications précédentes, **caractérisé en ce que** le matériau support (A) est un treillis de verre, lequel comprend des fibres de verre continues qui sont de préférence choisies dans le groupe constitué par des fibres de verre E, des fibres de verre C ou des fibres de verre présentant une composition de verre telle que spécifiée dans la revendication 1 pour les plaquettes de verre (B) et des mélanges de celles-ci.

6. Séparateur de batterie selon l'une des revendications précédentes, **caractérisé en ce qu'**il présente un mouillage élevé vis-à-vis d'un liquide électrolytique, l'angle de contact entre le liquide électrolytique et le séparateur de batterie étant < 30°.

7. Séparateur de batterie selon l'une quelconque des revendications précédentes, **caractérisé en ce qu'**il présente une porosité située dans la plage entre 20 et 60 %, et de préférence entre 30 et 60 % ; et/ou
les plaquettes de verre (B) présentent une épaisseur moyenne dans la plage de 0,5 à 20 µm et de préférence de 1 à 10 µm ; et/ou
au moins 98 % en poids des plaquettes de verre (B) ont une longueur moyenne d'arête < 45 µm et de préférence < 31 µm ; et/ou
au moins 99 % en poids des plaquettes de verre (B) ont une longueur moyenne d'arête < 50 µm et de préférence < 32 µm ; et/ou
le séparateur de batterie présente une épaisseur située dans la plage de 0,02 à 0,3 mm et de préférence de 0,05 à 0,2 mm.

8. Séparateur de batterie selon l'une quelconque des revendications précédentes, **caractérisé en ce que** le séparateur de batterie est constitué du composite ; et/ou le composite est constitué des composants (A) à (C).

9. Séparateur de batterie selon l'une des revendications précédentes, **caractérisé en ce que** les plaquettes de verre (B) sont intégrées dans le matériau support, de préférence dans un voile de verre, dans une structure de mur de briques.

10. Séparateur de batterie selon l'une quelconque des revendications précédentes, **caractérisé en ce que** les plaquettes de verre (B) présentent un rapport d'aspect dans la plage de 1 : 3 à 1 : 100, de préférence dans la plage de 1 : 5 à 1 : 20.

11. Séparateur de batterie selon l'une quelconque des revendications précédentes, **caractérisé en ce que** le retrait du séparateur de batterie, lorsqu'il est exposé à des températures de 500 °C pendant 60 minutes, est inférieur à 2 %.

12. Procédé de fabrication d'un séparateur de batterie selon l'une quelconque des revendications 1 à 11, comprenant les étapes suivantes :
(a) Fourniture d'un matériau support (A)
(b) Fourniture de plaquettes de verre (B)
(c) Insertion des plaquettes de verre (B) dans le matériau support (A) par un procédé choisi dans le groupe constitué par le tirage de film, le racloir pneumatique, la raclette à rouleau, le Reverse Roll Coating, le Kiss Coating, l'application « Pflatsch », l'application par foulard, la sérigraphie au pochoir, la sérigraphie à plat, le Curtain Coating, l'application par buse de pulvérisation, l'impression tramée ou par calandrage, après quoi on obtient un séparateur de batterie ;
(d) Séchage du séparateur de batterie de l'étape (c).

13. Utilisation d'un séparateur de batterie selon l'une quelconque des revendications 1 à 11 dans une batterie comprenant au moins un électrolyte et au moins 2 électrodes.
